Europäisches Patentamt

European Patent Office

Office européen des brevets

(11) Publication number: **0 098 706**
**B1**

(12) **EUROPEAN PATENT SPECIFICATION**

(45) Date of publication of patent specification: **04.02.87**

(51) Int. Cl.⁴: **G 01 L 1/22, G 01 L 1/26**

(21) Application number: **83303535.5**

(22) Date of filing: **20.06.83**

(54) **Force transducers.**

(30) Priority: **02.07.82 US 394956**

(43) Date of publication of application:
**18.01.84 Bulletin 84/03**

(45) Publication of the grant of the patent:
**04.02.87 Bulletin 87/06**

(84) Designated Contracting States:
**DE FR GB IT**

(56) References cited:
**FR-A-2 364 441**
**US-A-4 103 545**

(73) Proprietor: **THE BABCOCK & WILCOX COMPANY**
**1010 Common Street P.O. Box 60035**
**New Orleans Louisiana 70160 (US)**

(72) Inventor: **Keyes, Marion A., IV**
**120 Riverstone Drive**
**Chagrin Falls Ohio 44022 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to force transducers.

A known type of force transducer, an example of which is illustrated and described in FR—A—2 364 441 and in our published European Patent Application No. EP 0 077 184, relevant under Article 54(3), EPC, generates an output signal corresponding to the magnitude of an input force. The input force is applied through a force receiving base to which a free end of a leaf spring flexure is anchored, the other end of which is anchored in a fixed base. A force applied to the force receiving base causes the leaf spring flexure to bend about the fixed base. The output signal is generated by measuring the strain in the leaf spring flexure by means of one or more strain gauges bound to or diffused onto one or more surfaces of the leaf spring flexure. The span of force ranges within which such a transducer can be calibrated is materially limited. To obtain acceptable resolution and accuracy while avoiding over-stressing the leaf spring flexure, displacement of the free end thereof must be constrained to be within narrow limits. To cover the span of force ranges found in industrial applications, a multiplicity of leaf spring flexures must therefore be available and the calibration of a specific leaf spring flexure for a designated force range obtained by adjusting its thickness or other physical dimension.

According to the present invention there is provided a force transducer for generating an output signal corresponding to the magnitude of a force, the transducer having a force receiving base cantilevered from a fixed base by a spring flexure having a spring rate such that a given displacement of the force receiving base is produced by an applied force of given magnitude, characterised in that a removable auxiliary spring flexure is disposed in parallel relationship to the first-mentioned spring flexure, and means is provided for anchoring opposite ends of the auxiliary spacing flexure in the fixed base and force receiving base, respectively, whereby the displacement of the force receiving base is substantially the same as said given displacement for an applied force of greater magnitude than the first-mentioned applied force.

In contrast to the prior art mentioned above, in a force transducer embodying the invention and described hereinbelow the span of force ranges within which the transducer can be calibrated is expanded by a compound flexure unit incorporating both a leaf-spring flexure and an auxiliary calibrating spring flexure.

In the embodiment described below, the compound flexure unit is provided with means whereby the calibrating spring flexure may be easily removed from or anchored in place in the compound flexure unit. The compound flexure unit is designed to receive calibrating spring flexures having different spring rates whereby the flexure unit is readily adjusted to constrain the displacement of the leaf spring flexure within predetermined limits for a greatly expanded span of maximum input force.

The invention will now be further described, by way of illustrative and non-limiting example, with reference to the accompanying drawing, in which:

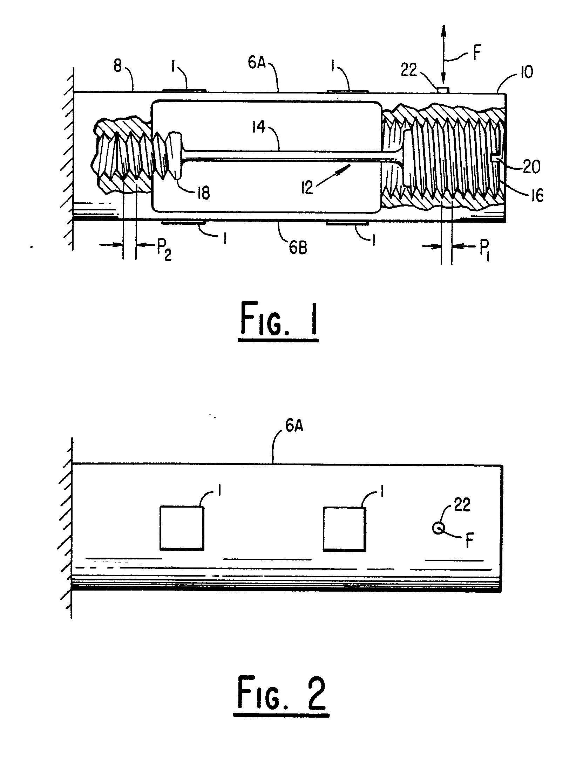

Figure 1 is a partially sectioned side elevation of a force transducer embodying this invention; and

Figure 2 is a top plan view of the transducer illustrated in Figure 1.

The drawing shows a force transducer comprising spaced apart parallel leaf spring flexures 6A and 6B, each having one end anchored in and cantilevered from a fixed base 8 and the other end anchored in and cantilevered from a force receiving base 10. An input force F applied to a projection 22 on the base 10, normal to the flexures 6A and 6B, causes a proportional linear displacement of the base 10 and places the faces of the flexures 6A and 6B partly in compression and partly in tension. To generate an output signal corresponding to the strain produced by an input force F, one or more strain gauges 1, which may be incorporated in any one of known suitable readout circuits (not shown), may be bonded to or diffused onto the surfaces of the flexures.

To obtain acceptable resolution and accuracy, while avoiding overstressing the flexures 6A and 6B, the displacement of the free ends of the flexures, i.e. of the force receiving base 10, at a maximum applied force F, must be constrained to be within predetermined narrow limits. Thus, to satisfy the needs of the wide variety of force transducer applications, with the transducer as so far described it is necessary to have a multiplicity of transducers available.

However, in order to avoid the need for a multiplicity of transducers, the present transducer is provided a removable auxiliary spring flexure 12 in the form of a rod provided with a relatively small diameter flexure section 14 and threaded end sections 16 and 18 engaging threads formed in bores in the force receiving base 10 and fixed base 8, respectively. The auxiliary spring flexure 12 may be provided with a screwdriver slot 20 so that it may be readily inserted into or removed from the flexure unit by means of a screwdriver. The threads on the end section 16 have a slightly smaller pitch ($P_1$) than the pitch ($P_2$) of the threads on the end section 18 which, when the auxiliary spring flexure 12 is driven home, both preload and rigidly anchor it in the fixed base space 8 and force receiving base 10. Accordingly, a single force transducer may be used to cover a wide span of input force ranges by the insertion in the transducer of an auxiliary spring flexure 12 having a spring rate supplementing that of the flexures 6A and 6B to maintain the displacement of the force receiving base within predetermined limits for any specific input force range.

## Claims

1. A force transducer for generating an output signal corresponding to the magnitude of a force (F), the transducer having a force receiving base (10) cantilevered from a fixed base (8) by a spring flexure (6A, 6B) having a spring rate such that a given displacement of the force receiving base (10) is produced by an applied force of given magnitude, characterised in that a removable auxiliary spring flexure (12) is disposed in parallel relationship to the first-mentioned spring flexure (6A, 6B), and means is provided for anchoring opposite ends of the auxiliary spring flexure (12) in the fixed base (8) and force receiving base (10), respectively, whereby the displacement of the force receiving base (10) is substantially the same as said given displacement for an applied force of greater magnitude than the first-mentioned applied force.

2. A force transducer according to claim 1, wherein the auxiliary spring flexure (12) comprises a rod having a centre section (14) of relatively small cross-sectional area and end sections (16, 18) of greater cross-sectional area.

3. A force transducer according to claim 2, wherein the opposite end sections (16, 18) of the auxiliary spring flexure (12) are provided with screw threads of different pitch.

4. A force transducer according to claim 3, wherein the means for anchoring the opposite ends of the auxiliary spring flexure (12) in the fixed and force receiving bases (8, 10) comprises bores in the fixed and force receiving bases, the bore in one base (8) having a screw thread that can engage the screw thread on one end section (18) of the auxiliary flexure spring (12) and the bore in the other base (10) having a screw thread that can engage the screw thread on the other end section (16) of the auxiliary spring flexure.

## Patentansprüche

1. Kraftwandler für die Erzeugung eines Ausgangssignals entsprechend der Größe einer Kraft (F) mit einer Kraftaufnahmebasis (10), die von einer ortsfesten Basis (8) aus vorkragend von einer Biegefeder (6A, 6B) getragen wird, welche eine solche Federkonstante hat, daß eine bestimmte Verschiebung der Kraftaufnahmebasis (10) durch eine angelegte Kraft bestimmter Größe erzeugt wird, dadurch gekennzeichnet, daß eine lösbare Hilfsbiegefeder (12) in paralleler Beziehung zu der ersterwähnten Biegefeder (6A, 6B) angeordnet ist und eine Einrichtung zur Verankerung der entgegengesetzten Enden der Hilfsbiegefeder (12) in der ortsfesten Basis (8) bzw. der Kraftaufnahmebasis (10) vorgesehen ist, wobei die Verschiebung der Kraftaufnahmebasis (10) im wesentlichen die gleiche wie die bestimmte Verschiebung für eine angelegte Kraft größerer Größe als die der ersterwähnten angelegten Kraft ist.

2. Kraftwandler nach Anspruch 1, bei dem die Hilfsbiegefeder (12) einen Stab mit einem Mittelabschnitt (14) von relativ kleiner Querschnittsfläche und mit Endabschnitten (16, 18) größerer Querschnittsfläche aufweist.

3. Kraftwandler nach Anspruch 2, bei dem die entgegengesetzten Endabschnitte (16, 18) der Hilfsbiegefeder (12) mit Schraubengewinden unterschiedlicher Steigung versehen sind.

4. Kraftwandler nach Anspruch 3, bei dem die Einrichtung für die Verankerung der entgegengesetzten Enden der Hilfsbiegefeder (12) in der ortsfesten Basis und der Kraftaufnahmebasis (8, 10) Bohrungen in der ortsfesten Basis und der Kraftaufnahmebasis aufweist, wobei die Bohrung in der einen Basis (8) ein Schraubengewinde hat, das in das Schraubengewinde an einem Endabschnitt (18) der Hilfsbiegefeder (12) eingreifen kann, und die Bohrung in der anderen Basis (10) ein Schraubengewinde hat, das in das Schraubengewinde am anderen Endabschnitt (16) der Hilfsbiegefeder eingreifen kann.

## Revendications

1. Transducteur de force servant à produire un signal de sortie correspondant à l'intensité d'une force (F), le transducteur comportant une base (10) recevant la force et montée en porte-à-faux sur une base fixe (8) au moyen d'un organe élastique en forme de ressort (6A, 6B) possédant une flexibilité telle qu'un déplacement donné de la base (10) recevant la force est produit par une force appliquée possédant une intensité donnée, caractérisé en ce qu'un organe élastique en forme de ressort auxiliaire amovible (12) est disposé parallèlement à l'organe flexible en forme de ressort (6A, 6B) mentionné en premier, et qu'il est prévu des moyens pour ancrer des extrémités opposées de l'organe flexible en forme de ressort auxiliaire (12) respectivement dans la base fixe (8) et dans la base (10) recevant la force, ce qui a pour effet que le déplacement de la base (10) recevant la force est essentiellement le même que ledit déplacement donné pour une force appliquée possédant une intensité supérieure à la force appliquée mentionnée en premier lieu.

2. Transducteur de force selon la revendication 1, dans lequel l'organe élastique en forme de ressort auxiliaire (12) comporte une tige munie d'une section centrale (14) possédant une surface relativement petite en coupe transversale et des sections d'extrémité (16, 18) possédant une surface plus importante en coupe transversale.

3. Transducteur de force selon la revendication 2, dans lequel les sections d'extrémité opposées (16, 18) de l'organe élastique en forme de ressort auxiliaire (12) sont munies de filetages possédant des pas différents.

4. Transducteur de force selon la revendication 3, dans lequel les moyens d'ancrage des extrémités opposées de l'organe flexible en forme de ressort auxiliaire (12) dans la base fixe et dans la base recevant la force (8, 10) comprennent des perçages ménagés dans ces bases, le perçage situé dans une base (8) possédant un taraudage permettant l'engagement du filetage situé sur une section d'extrémité (18) de l'organe flexible en forme de ressort auxiliaire (12) et le perçage situé dans l'autre base (10) comportant un taraudage qui permet l'engagement du filetage situé sur l'autre section d'extrémité (16) de l'organe élastique en forme de ressort auxiliaire.

FIG. 1

FIG. 2